# EUROPÄISCHE PATENTSCHRIFT

(11) **EP 1 480 874 B1**
(45) Veröffentlichungstag und Bekanntmachung des Hinweises auf die Patenterteilung: **07.06.2006**
(21) Anmeldenummer: 03743310.9
(22) Anmeldetag: 12.02.2003
(51) Int. Cl.: B64D 11/06

(54) **VERFAHREN ZUR BEDARFSGERECHTEN ANPASSUNG DER SITZREIHENORDNUNG IN PASSAGIERFLUGZEUGEN**
METHOD FOR ADAPTING THE ROWS OF SEATS IN PASSENGER PLANES ACCORDING TO NEED
PROCEDE ET DISPOSITIF PERMETTANT D'AJUSTER, EN FONCTION DES BESOINS, L'AGENCEMENT DES RANGEES DE SIEGES DANS UN AVION DE PASSAGERS

(30) Priorität: 05.03.2002 DE 10211437
(43) Veröffentlichungstag der Anmeldung: 01.12.2004
(73) Patentinhaber: Bishop GmbH, 22587 Hamburg (DE)
(72) Erfinder: BISHOP, Peter, 22587 Hamburg (DE); MADOUI, Noureddine, 30459 Hannover (DE)
(74) Vertreter: Ahme, Johannes
(86) Internationale Anmeldenummer: PCT/EP2003/001386
(87) Internationale Veröffentlichungsnummer: WO 2003/074357

(56) Entgegenhaltungen:
- EP-A- 0 021 933
- EP-A- 0 215 495
- EP-A- 0 282 244
- PATENT ABSTRACTS OF JAPAN vol. 015, no. 042 (M-1076), 31. Januar 1991 (1991-01-31) & JP 02 279433 A (TENRYU KOGYO KK), 15. November 1990 (1990-11-15)

## Beschreibung

Die vorliegende Erfindung betrifft ein Verfahren zur bedarfsgerechten Anpassung der Sitzreihenanordnung in Passagierflugzeugen, nach dem Oberbegriff von Patentanspruch 1.

In Passagierflugzeugen sind die Sitzreihen auf Befestigungsschienen, die in Längsrichtung des Flugszeugs im Fußboden verlaufen, fest montiert. Der Betreiber des Flugzeugs wählt eine Sitzreihenanordnung, die für den gewünschten Einsatzzweck am günstigsten ist. Unter Sitzreihenanordnung wird hier die Anzahl der Sitzreihen und ihre Abstände zueinander, die in unterschiedlichen Sektionen in Längsrichtung des Flugzeugs unterschiedlich sein können, verstanden. In der Regel befindet sich vorne im Flugzeug eine Sektion Business Class mit größeren Sitzreihenabständen, gefolgt von einer in der Regel größeren Sektion in der Economy Class mit kleineren Sitzreihenabständen. Gelegentlich werden auch durchgehend einheitliche Sitzreihenabstände verwendet.

Bisher werden die Flugzeuge mit einer einmal festgelegten Sitzreihenanordnung langfristig betrieben, und die Sitzreihenanordnung nur unter außerordentlichen Umständen verändert, wenn das Flugzeug z.B. für einen neuen Einsatzzweck hergerichtet werden soll und eine Änderung der Anzahl der Sitzreihen in der Business Class und in der Economy Class vorgenommen werden soll. Solche Änderungen der Sitzreihenanordnung wurden bisher nur unter außerordentlichen Umständen vorgenommen, da sie einen hohen personellen und zeitlichen Aufwand erfordern, weil jede Sitzreihe, deren Position zu verändern ist, vom Bodenpersonal aus ihrer Befestigung auf den Befestigungsschienen mechanisch gelöst, manuell verschoben und wieder festgesetzt werden muss. Gleichzeitig müssen, wenn das Verhältnis von Sitzreihen in der Economy Class zu Sitzreihen in der Business Class verändert wird, in der Regel Sitzreihen in das Flugzeug gebracht oder daraus entnommen werden. Es ist klar, dass solche Umstellungen einen so hohen personellen und zeitlichen Aufwand mit sich bringen, so dass sie nur in Ausnahmefällen durchgeführt werden.

Andererseits ergeben sich bei den heutigen Luftverkehrsbedingungen, wenn ein Passagierflugzeug einen Flughafen anfliegt und nach möglichst kurzer Standzeit am Boden wieder den Rückflug zum Ausgangsflughafen oder zu einem anderen Flughafen antritt, oft Situationen, in der die Sitzreihenanordnungen mit ihrer starren Aufteilung in Business Class und Economy Class nicht in ökonomisch günstiger Weise ausgenutzt werden können. Beispielsweise sind Flüge am frühen Morgen oder am Abend oft mit einem hohen Anteil von Geschäftsreisenden in der Business Class belegt, während Flüge auf den gleichen Strecken tagsüber stärker von Passagieren der Economy Class ausgelastet sind. In diesem Fall kann, wenn eine relativ große Sektion von Sitzreihen der Business Class bereitgehalten wird, unter Flugbedingungen mit einem hohen Anteil von Economy-Passagieren die Beförderungskapazität des Flugszeugs nicht optimal genutzt werden; andererseits stehen in den Spitzenzeiten der Business Class-Auslastung nicht genügend Sitzreihen in der Business Class zur Verfügung.

Aus JP 02 279433 A ist ein gattungsgemäßes Verfahren zur bedarfsgerechten Anpassung der Sitzreihenanordnung in Passagierflugzeugen bekannt, bei dem, gegebenenfalls sektionsweise unterschiedliche, Sitzreihenabstände in Längsrichtung in dem Passagierflugzeug eingestellt werden, wobei in einer Steuerungseinrichtung eine aktuell gewünschte Sitzreihenanordnung gespeichert wird und jede Sitzreihe, deren Position zur Erzielung der aktuell gewünschten Sitzreihenanordnung zu verändern ist, gesteuert durch die Steuerungseinrichtung automatisch auf ihren Befestigungsschienen auf die durch die aktuell gewünschte Sitzreihenanordnung vorgegebene Position verfahren wird.

Es ist Aufgabe der vorliegenden Erfindung, ein Verfahren anzugeben, mit dem eine Anpassung der Sitzreihenanordnung in Passagierflugzeugen ohne maßgebliche Erhöhung der Standzeit am Boden zwischen zwei Flügen möglich ist.

Zur Lösung dieser Aufgabe dient das Verfahren mit den kennzeichnenden Merkmalen des Patentanspruchs 1. Vorteilhafte Ausführungsformen der Erfindung sind in den Unteransprüchen angegeben. Ein Passagierflugzeug zur Ausführung des Verfahrens ist Gegenstand der Patentansprüche 5 bis 6.

Es ist eine Steuerungseinrichtung eine Steuerungseinrichtung vorgesehen, in der die für einen bestimmten Flug optimale, gewünschte Sitzreihenanordnung gespeichert wird. Die Steuerungseinrichtung verfährt dann automatisch die Sitzreihen auf ihren Befestigungsschienen, so dass jede Sitzrreihe auf die durch die aktuell gewünschte Sitzreihenanordnung vorgegebene Position gefahren wird. Insbesondere ist die Steuerungseinrichtung in der Lage, für jede Sitzreihe, deren Position zur Erzielung der aktuell gewünschten Sitzreihenordnung zu verändern ist, Steuersignale zu erzeugen, die die automatische Lösung der Arretierung der jeweiligen Sitzreihe auf ihren Befestigungsschienen bewirken, die ferner den Betrieb von Antriebseinrichtungen so steuern, dass die Sitzreihe auf den Befestigungsschienen auf die durch die aktuell gewünschte Sitzreihenanordnung vorgegebene Position kontinuierlich verfahren wird, und die schließlich durch Betätigung einer Verschlusseinrichtung die erneute Arretierung der Sitzreihe in der vorgegebenen Position auf ihren Befestigungsschienen automatisch bewirkt. Diese Schritte können auch simultan für mehrere Sitzreihen ausgeführt werden.

Erfindungsgemäß ist vorgesehen, dass die Steuerungseinrichtung in das Avionicsystem IMA - Integrated Modular Avionics - integriert ist und dass dem Passagierflugzeug bereits vor der Landung die aktuell gewünschte Sitzreihenanordnung für den nächsten Flug per Datenferübertragung von einem Logistikzentrum des Flughafens gesendet und in der Steuerungseinrichtung gespeichert wird.

Auf diese Weise ist es möglich, dass ein Passagierflugzeug, bereits vor der Landung die Daten der aktuellen Passagierverteilung und der sich daraus ergebenden optimalen Sitzreihenanordnung für den nächsten Flug erhält, damit es nach der Landung in möglichst kurzer Zeit auf den nächsten Flug vorbereitet werden kann. Falls eine Veränderung der Anzahl der Sitzreihen nötig ist, z.B. einige Sitzreihen weniger benötigt werden, so kann nach Entnahme der überzähligen Sitzreihen die Steuerungseinrichtung, die mit den Daten der neuen gewünschten Sitzreihenanordnung versorgt ist, auf Befehl diejenigen Sitzreihen, die zu verschieben sind, automatisch und individuell ferngesteuert verfahren und in der neuen gewünschten Position wieder arretieren. Wenn die Anzahl der Sitzreihen in der Business Class deutlich erhöht wird, kann es notwendig sein, eine oder mehrere Sitzreihen aus der Economy Class zu entfernen; umgekehrt kann es, wenn der Anteil der Business Class-Sitzreihen reduziert wird, erwünscht sein, einige Sitzreihen der Economy Class hinzuzufügen. Dieser Vorgang muss vom Bodenpersonal durchgeführt werden, das rechtzeitig vor Ankunft des Flugzeugs, sobald die gewünschte Sitzreihenverteilung aufgrund der Passagierbelegung feststeht, vom Logistikzentrum der Fluggesellschaft Nachricht erhält, eine benötigte Anzahl von Sitzreihen in der Parkposition des Flugzeuges bereitzustellen und Personal zur Entnahme oder Hinzufügung von Sitzreihen bereitzustellen.

Die Daten der gewünschten Sitzreihenanordnung werden von einem Logistikzentrum der Fluggesellschaft per Datenfernübertragung schon vor der Landung übertragen und in die Steuerungseinrichtung eingespeist wobei die Möglichkeit besteht, dass das Kabinenpersonal über eine Schnittstelle (CIDS - Cabin Interface Device System) einzelne Daten über das CIDS überschreibt.

Die Steuerungseinrichtung ist in das Avionic-System des Flugzeugs IMA - Integrated Modular Avionics integriert. Die Steuerungseinrichtung kann durch Computer-Software realisiert sein, die durch Vergleich der gegenwärtigen Sitzreihenanordnung mit der sich aus den eingespeisten Daten ergebenden aktuell gewünschten Sitzreihenanordnung feststellt, welche Sitzreihen zu verschieben sind und daraufhin Steuersignale erzeugt, die die jeweiligen Sitzreihen verfahren, indem zunächst deren Arretierung durch Lösen der Verschlusseinrichtung der Sitzreihe von den Befestigungsschienen gelöst wird, die Sitzreihe dann durch die von den Steuersignalen gesteuerten Antriebseinrichtungen auf die gewünschte Position verfahren wird und dort durch erneute Betätigung der Verschlusseinrichtung wieder arretiert wird.

Diese Anpassung der Sitzreihenanordnung kann am Boden in kürzester Zeit vorgenommen werden, ohne dass es zu einer signifikanten Erhöhung der Standzeit des Flugzeugs am Boden kommt. Durch die vorliegende Erfindung lässt sich somit eine bessere Ausnutzung des Kabinenraums der Passagierflugzeuge erzielen, indem die jeweils optimale Aufteilung in Sitzreihen der Economy Class und der Business Class eingestellt wird. Darüber hinaus kann, bei nicht vollständiger Auslastung eines Fluges und nach Entnahme einiger Sitzreihen, der Sitzreihenabstand für alle Sitzreihen erhöht werden, was den Sitzkomfort für alle Passagiere verbessert.

Für eine effiziente Ausnutzung des erfindungsgemäßen Verfahrens ist es notwendig, dass an den von der Fluggesellschaft angesteuerten Flughäfen Logistikzentren vorhanden sind, in denen eine bestimmte Anzahl von Sitzreihen in der Business Class und der Economy Class bereitgehalten werden, die in ein ankommendes Flugzeug vor dem Rückflug eingebaut werden können, oder in die aus dem ankommenden Flugzeug ausgebaute Sitzreihen gelagert werden können.

Heutige Passagierflugzeuge können mit relativ geringem Aufwand nachgerüstet werden, um die vorliegende Erfindung auzuführen, da die heute standardmäßig in den Kabinenböden vorhandenen Befestigungsschienen für die Sitzreihen auch zum Verfahren der Sitzreihen verwendet werden können. Nachgerüstet werden müssen Antriebseinrichtungen zum Verfahren der Sitzreihen und Verschlusseinrichtungen zum automatischen Lösen/Arretieren einer Sitzreihe auf den Befestigungsschienen sowie eine Steuerungseinrichtung.

Mit der vorliegenden Erfindung ist es den Fluggesellschaften auch möglich, einzelnen Reisenden auf Wunsch einen vergrößerten Abstand zur davorstehenden Sitzreihe zu bieten. Dies kann z.B. als Service für erhöhten Komfort oder als Sicherheitsmaßnahme bei gefährdeten Personen (Thrombosegefahr auf Langsteckenflügen) erwünscht sein.

Ferner kann mit der vorliegenden Erfindung die Bereithaltung von Ersatzflugzeugen für die Fluggesellschaften effektiver gestaltet werden, da einerseits ein Flugzeug eines Typs auf verschiedene Passagierkapazitäten eingestellt werden kann und so grundsätzlich verschiedene andere Flugzeugtypen ersetzen kann, wodurch weniger Flugzeugtypen als Ersatzflugzeuge bereitgehalten werden müssen. Andererseits ist es möglich, dass bei Ausfall eines Flugzeugs mehrere der planmäßg vorgesehenen Folgeflüge auf erhöhte Kapazität eingestellt werden und die Passagiere des ausgefallenen Flugzeugs auf diese Folgeflüge verteilt werden.

Unter dem Begriff Passagierflugzeug wird für die Zwecke der vorliegenden Anmeldung jedes für die Personenbeförderung geeignete Flugzeug verstanden.

Die Erfindung wird im folgenden anhand von Beispielen in den Zeichnungen näher erläutert, in denen:
- Figure 1:: Eine schematische Darstellung von Flugverbindungen von einem Knoten zu verschiedenen Zielflughäfen mit verschiedenen jeweiligen Auslastungssituationen;
- Figur 2:: Eine schematische Draufsicht auf eine Kabine eines Passagierflugzeuges im Schnitt einschließlich einer vergrößerten perspektivischen Darstellung einer Sitzreihe;
- Figuren 3-5:: Jeweils eine Draufsicht auf eine Kabine im Schnitt mit jeweils verschiedenen Sitzreihenanordnungen zeigen;
- Figur 6:: Eine schematische Draufsicht auf eine Befestigungsschiene zeigt;
- Figur 7:: Eine schematische seitliche Draufsicht auf einen Fuß einer Sitzreihe zeigt;
- Figur 8:: Eine schematische Draufsicht von unten auf den Fuß aus Figur 7 zeigt; und
- Figur 9:: Eine Querschnittsansicht des Fußes aus Figur 7 zeigt;

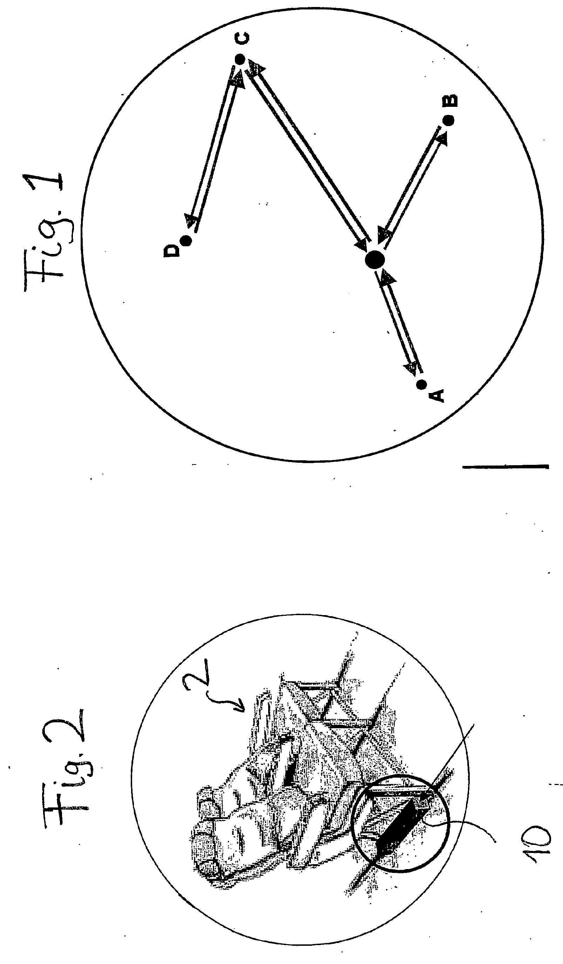

Figur 1 zeigt eine schematische Darstellung von Flugstrecken zwischen einem zentralen Knoten und Zielflughäfen A, B, C und D. Beispielhaft sei hier von einem Passagierflugzeug ausgegangen, dessen Normalkonfiguration 30 Sitze in der Business Class und 90 Sitze in der Economy Class hat. Betrachtet man nun die aktuellen Anforderungen der Verbindung zwischen dem Knoten und dem Zielflughafen A, so kann es geschehen, dass tatsächlich bei dem Flug vom Knoten zum Zielflughafen A 28 Business Class Plätze und 60 Economy Class Plätze benötigt werden, während auf dem Rückflug von A zum Knoten 35 Business Class Plätze und 68 Economy Class-Plätze benötigt werden. Andererseits können auf der Verbindung zwischen den Flughäfen C und D 21 Business Class Plätze und 60 Economy Class Plätze benötigt werden. Es ist ohne weiteres erkennbar, dass mit einer Standardkonfiguration der Sitzreihenanordnung mit fester Anzahl von Business Class Plätzen und Economy Class Plätzen keine effiziente Ausnutzung des vorhandenen Kabinenraumes des Passagierflugzeuges möglich ist und dass auf verschiedenen Strecken kaum die gleichen Flugzeugtypen eingesetzt werden können.

Gemäß der vorliegenden Erfindung ist vorgesehen, dass die Sitzreihen von einer Steuerungseinrichtung automatisch verfahren werden können, damit eine schnelle Umstellung von Sitzreihenabständen gemäß des aktuellen Bedarfs möglich ist. Die Steuerungseinrichtung kann aus einem Programmpaket bestehen, das in die Datenverarbeitungseinrichtungen des Flugzeuges eingespeist ist. Diese Steuerungseinrichtung erhält per Datenfernübertragung von einem Logistikzentrum der Fluggesellschaft am Flughafen die Daten der für einen aktuellen Flug gewünschten Sitzreihenanordnung; das Kabinenpersonal kann ergänzend Daten über eine Schnittstelle (CISD) in der Flugzeugkabine eingeben.

Jede Sitzeinrichtung ist mit Verschlusseinrichtungen versehen, mit denen sie auf den Befestigungsschienen im Boden der Fahrgastkabine arretiert werden können. Diese Verschlusseinrichtungen können z.B. Klemmbacken aufweisen, die in seitlicher Richtung kraftschlüssig an den Befestigungsschienen angreifen; zur Befestigung gegen Bewegungen in Flugrichtung sind vorzugsweise formschlüssige Verbindungen zwischen den Befestigungsschienen und den Verschlusseinrichtungen vorgesehen. Die Verschlusseinrichtungen sind ferner mit Antriebsmitteln versehen, die die Klemmbacken und/oder die formschlüssigen Verbindungen in und außer Eingriff mit den Befestigungsschienen bringen, sobald ein darauf gerichtetes Steuersignal bei der betreffenden Sitzeinrichtung eintrifft. Die Verschlusseinrichtungen sind so auszulegen, dass sie die bekannten Beschleunigungsanforderungen sicher standhalten. Die stabile Auslegung solcher Verschlusseinrichtungen ist dem Fachmann geläufig.

Vorzugsweise werden die Steuersignale von der Steuereinrichtung zu den Sitzreihen per Funk übertragen; alternativ können auch aus leitfähigem Metall bestehende Befestigungsschienen selbst zur Weiterleitung der Steuersignale verwendet werden, oder es können Kabelverbindungen benutzt werden, wobei letzteres allerdings einen sehr hohen installationstechnischen Aufwand bedeutet, insbesondere wenn auf die Möglichkeit des schnellen Einbaus oder der schnellen Entnahme von einzelnen Sitzreihen berücksichtigt werden soll.

Trifft ein Steuerungssignal ein, das sich durch eine entsprechende Kodierung oder Kennung an eine bestimmte Sitzreihe richtet, so wird das Signal von einer Empfangseinrichtung in der Sitzreihe empfangen und als an diese Sitzreihe gerichtet identifiziert; hierzu kann zum Beispiel vorgesehen sein, dass jede Sitzreihe mit einem Transponder versehen ist, in dem ein Identifizierungscode für die jeweilige Sitzreihe gespeichert ist und der von der Steuereinrichtung abfragbar ist. Daraufhin werden aufgrund der Steuerungssignale die Antriebsmittel zur Lösung der Verschlusseinrichtung aktiviert, um die Arretierung der Sitzreihe auf den Befestigungsschienen zu lösen. Weitere Steuersignale steuern die Antriebseinrichtungen der Sitzreihe so, dass die Sitzreihe auf dem Befestigungsschienen um eine gewünschte Distanz zu der neuen vorgegebenen Position verfahren wird. Wie in Figur 2 gezeigt, kann unten an der Sitzreihe 2 ein Modul 10 vorgesehen sein, in dem Empfangseinrichtungen für die Steuersignale und Elektromotoren der Antriebseinrichtungen untergebracht sind. Die Elektromotoren können z.B., worauf weiter unten noch in einem Ausführungsbeispiel eingegangen wird, mit Zahnrädern in feste Zahnstangen in den Befestigungsschienen im Flugzeugboden in Eingriff treten, wodurch eine schlupffreie Überträgung gewährleistet wird. In diesem Fall können auch die Signale von Drehwertgebern der Elektromotoren verwendet werden, um der Steuerungseinrichtung eine Rückmeldung über die Anzahl der Drehungen und damit über die zurückgelegte Strecke zu geben, woraus sehr genau jeweils die aktuelle Position der Sitzreihe bestimmt werden kann. Alternativ kann ein Sensor die jeweils zurückgelegte Strecke durch Abtasten der Befestigungsschiene erfassen, so dass die jeweilige Position der Sitzreihe in der Steuereinrichtung aktualisiert werden kann.

Als Antriebseinrichtung zur selektiven Verschiebung einzelner Sitzreihen ist es als Alternative zu Antriebsmotoren in jeder Sitzreihe möglich, einen im Kabinenboden in Längsrichtung umlaufenden Seilzug bereitzustellen. Wenn eine Sitzreihe verschoben werden soll, kann dies dadurch bewirkt werden, dass sich die zu verschiebende Sitzreihe auf ein entsprechendes Steuersignal der Steuereinrichtung hin in Eingriff mit dem Seilzug tritt, um dann von dem Seilzug um die gewünschte Distanz gezogen zu werden, wonach sie sich wieder von dem Seilzug löst.

Nach Abschluss der durch die Steuerungseinrichtung vorgegebenen Bewegung der Sitzreihe werden die Verschlusseinrichtungen dann wieder geschlossen, so dass die Sitzreihe dann wieder fest verankert in ihrer neuen Position ist.

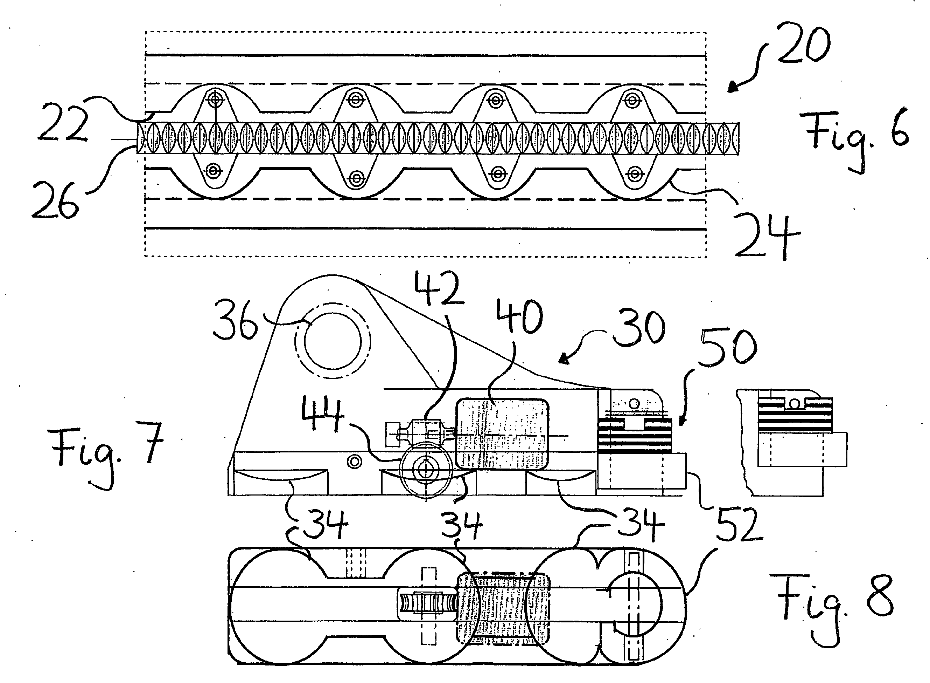

In Figur 6 ist eine Befestigungsschiene 20 schematisch in Ansicht von oben und teilweise in Durchsicht gezeigt. Befestigungsschienen sind in Passagierflugzeugen international genormt. Sie weisen als Hohlschienen einen Kanal auf, dessen seitlichen Begrenzungen in Figur 6 gestrichelt dargestellt sind und der oben teilweise geschlossen ist, so dass ein Öffnungsspalt 22 gebildet ist, der in regelmäßigen Abständen von 1 Zoll zu kreisförmigen Öffnungen 24 erweitert ist. Diese kreisförmigen Öffnungen 24 dienen dazu, die Gleitkörper am Fuß einer Sitzreihe in die Befestigungsschiene einführen zu können. Durch Verschieben des Fußes, so dass die Gleitkörper in Bereichen zwischen kreisförmigen Öffnungen 24 und der Befestigungsschiene liegen, wird ein formschlüssiger Eingriff zur Arretierung gegen Bewegungen quer und vertikal zur Längsrichtung der Befestigungsschiene erreicht. Insoweit ist der Aufbau der Befestigungsschienen identisch mit den heute international eingesetzten Befestigungsschienen in Passagierflugzeugen.

Um die Antreibbarkeit der einzelnen Sitzreihen zu erlauben, ist in der vorliegenden Ausführungsform eine Zahnstange 26 am Boden der Befestigungsschiene 20 montiert.

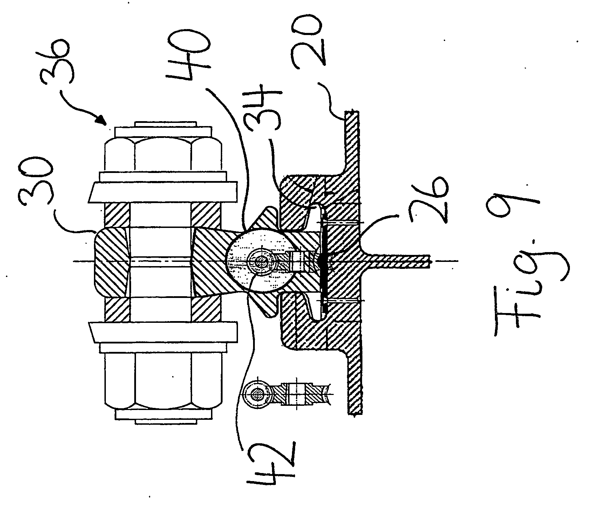

Figuren 7 bis 9 zeigen einen Fuß zum Eingriff in einer Befestigungsschiene, und zwar in Figur 7 in seitlicher Draufsicht, in Figur 8 in Draufsicht von unten und in Figur 9 im Querschnitt. An dem Fuß 30 ist über Bolzen 36 (siehe Figur 9), die Sitzreihe montiert. Der Fuß 30 hat im Wesentlichen scheibenförmige Gleitkörper 32, die in die Öffnungen 24 in der Befestigungsschiene einführbar sind. Wenn sich die Sitzreihe in einer Position befindet, so dass die Gleitkörper 32 in Öffnungen 24, der Befestigungsschiene liegen, so kann die Sitzreihe mit ihrem Fuß 30 aus der Befestigungsschiene angehoben bzw. in diese eingesetzt werden.

Als Antriebseinrichtung für die Sitzreihe dient in diesem Ausführungsbeispiel ein Elektromotor 40, der über ein Schneckenrad 42 ein Antriebszahnrad 44 antreibt. Das Antriebszahnrad 44 greift in die Zahnstange 26 am Boden der Befestigungsschiene 20. Durch selektiven Betrieb des Elektromotors 40, der durch die Steuerungseinrichtung angesteuert wird, kann die Sitzreihe so in eine genau vorgegebene Position in der Befestigungsschiene verfahren werden.

Die Verschlusseinrichtung zur Arretierung der Sitzreihe gegen Bewegungen in Längsrichtung in der Befestigungsschiene ist in diesem Ausführungsbeispiel folgendermaßen aufgebaut. Die Verschlusseinrichtung 50 hat einen Verschlusszapfen 52, der vorne an dem Fuß 30 vertikal beweglich aufgehängt ist. Der Verschlusszapfen 52 hat einen ringförmigen Körper mit einer Außenform, die eine Öffnung 24 in der Befestigungsschiene 20 im Wesentlichen vollständig ausfüllt. In der Ruhestellung sitzt der Verschlusszapfen 50 in einer Öffnung 24 und verriegelt dadurch den Fuß 30 gegen Längsbewegungen in der Befestigungsschiene 20. Um die Arretierung zu lösen, kann der Verschlusszapfen 50 durch einen Elektromagneten angehoben werden, so dass er aus der Öffnung 24 freikommt. Dadurch wird die Verriegelung gelöst und der Fuß 30 kann ist in Längsrichtung der Befestigungsschiene 20 beweglich und kann darin verfahren werden. Vorzugsweise ist der Verschlusszapfen 52 mit einer Federkraft beaufschlagt, die ihn nach unten in die verriegelte Stellung in eine Öffnung 24 drückt. Auf diese Weise ist sichergestellt, dass im Störungsfall, z.B. Ausfall der Stromversorgung, der Verschlusszapfen immer verriegelt bleibt.

In Figuren 3 bis 5 sind beispielhaft verschiedene Sitzreihenanordnungen, die in einem Flugzeug realisiert werden können, dargestellt. Figur 3 zeigt als Ausgangspunkt eine Sitzreihenanordnung mit 6 Sitzreihen in der Business Class (nebeneinanderliegende Sitze auf einer Seite des Ganges werden als Sitzreihe bezeichnet), und 26 Sitzreihen in der Economy Class. Ergibt sich nun für einen bestimmten Flug, z.B. von dem Knoten zum Zielflughafen A, dass 18 Sitze in Business Class und 60 Sitze in der Economy Class gebucht sind, so kann die in Figur 4 dargestellte Sitzreihenanordnung eingestellt werden. Hierzu ist es zunächst nötig, dass nach der Landung des Flugzeugs vom Bodenpersonal 16 Sitzreihen der Economy Class hinten im Flugzeug entfernt und durch sie Hintereingänge herausgebracht werden. Durch automatisches Verschieben sämtlicher verbleinder Sitzreihen der Economy Class nach hinten kann dann vorne Platz für vier Sitzreihen der Business Class geschaffen werden, die durch die Vordertüren hineingetragen und auf die Befestigungsschienen aufgesetzt werden. Dann ist die in Figur 4 dargestellte Sitzreihenanordnung gegeben, in der im Heck des Flugzeugs ein größerer Freiraum verbleibt. Dieser Freiraum kann auf dem betreffenden Flug entweder anderweitig genutzt werden, oder es ist mit der vorliegenden Erfindung leicht möglich, die Sitzreihenabstände sowohl in der Business Class als auch in der Economy Class zu erhöhen, um so die Bequemlichkeit für alle Passagiere zu verbessern. In dem dargestellten Beispiel könnten so die standardmäßigen Abstände von 36 Zoll in der Business Class und 31 Zoll in der Economy Class auf 50 Zoll für die Business Class und 40 Zoll für die Economy Class erhöht werden. Es ist leicht nachvollziehbar, dass sich auf diese Weise für die vielen nicht voll ausgebuchten Flüge eine deutliche Erhöhung der Bequemlichkeit für die Passagiere erreichen lässt, was für die Fluggesellschaft natürlich ein werbewirksamer Wettbewerbsvorteil ist.

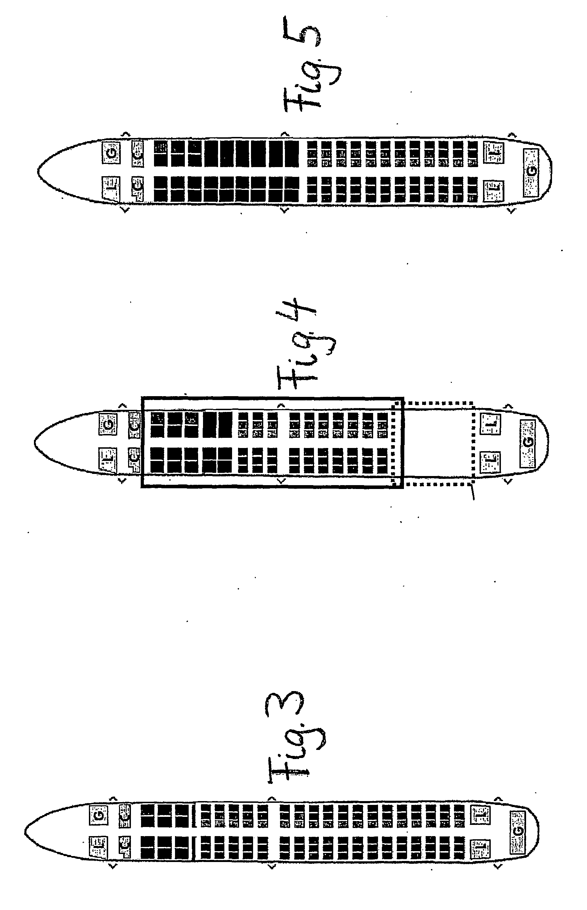

In Figur 5 ist dann die Situation für den Rückflug vom Flughafen A zum Knoten dargestellt, wobei bei diesem konkreten Flug 35 Sitzplätze in der Business Class und 68 Sitzplätze in der Economy Class benötigt werden. Entsprechend muss nach der Landung am Flughafen A durch Verschieben der Sitzreihen der Economy Class vorne Platz für acht Sitzreihen für die Business Class geschaffen werden, die vom Bodenpersonal bereitgestellt und montiert werden. Ferner müssen vier Sitzreihen für die Economy Class bereitgestellt und eingebaut werden. Anschließend können gewünschte Änderungen der Sitzreihenabstände mit dem erfindungsgemäßen Verfahren ausgeführt werden.

## Patentansprüche

1. Verfahren zur bedarfsgerechten Anpassung der Sitzreihenanordnung in Passagierflugzeugen, bei dem, gegebenenfalls sektionsweise unterschiedliche, Sitzreihenabstände in Längsrichtung in dem Passagierflugzeug eingestellt werden, wobei in einer Steuerungseinrichtung eine aktuell gewünschte Sitzreihenanordnung gespeichert wird und jede Sitzreihe, deren Position zur Erzielung der aktuell gewünschten Sitzreihenanordnung zu verändern ist, gesteuert durch die Steuerungseinrichtung automatisch auf ihren Befestigungsschienen auf die durch die aktuell gewünschte Sitzreihenanordnung vorgegebene Position verfahren wird, **dadurch gekennzeichnet, dass** die Steuerungseinrichtung in das Avionicsystem IMA - Integrated Modular Avionics - integriert ist und dass dem Passagierflugzeug bereits vor der Landung die aktuell gewünschte Sitzreihenanordnung für den nächsten Flug per Datenfernübertragung von einem Logistikzentrum des Flughafens gesendet und in der Steuerungseinrichtung gespeichert wird.

2. Verfahren nach Anspruch 1, **dadurch gekennzeichnet, dass** die Steuerungseinrichtung für jede Sitzreihe, deren Position zur Erzielung der aktuell gewünschten Sitzreihenanordnung zu verändern ist, Steuersignale erzeugt, die die automatische Lösung der Arretierung der Sitzreihe auf ihren Befestigungschienen bewirken, die den Betrieb von Antriebseinrichtungen (40) so steuern, dass die Sitzreihe auf den Befestigungsschienen auf die durch die aktuell gewünschte Sitzreihenanordnung vorgegebene Position verfahren wird, und die die Betätigung von Verschlusseinrichtungen (50) zur erneuten Arretierung der Sitzreihe in der vorgegebenen Position auf ihren Befestigungschienen bewirken.

3. Verfahren nach Anspruch 2, **dadurch gekennzeichnet, dass**, falls die gewünschte Sitzreihenanordnung mehr oder weniger Sitzreihen als aktuell vorhanden aufweist, zunächst eine entsprechende Anzahl von Sitzreihen aus dem Passagierflugzeug entnommen oder in dem Passagierflugzeug installiert werden.

4. Verfahren nach einem der vorhergehenden Ansprüche, **dadurch gekennzeichnet, dass** einzeln daten der aktuell gespeicherten Sitzreihenanordnung vom Bordpersonal über eine Schnittstelle (CIDS - Cabin Interface Device System) überschrieben werden können.

5. Passagierflugzeug zur Ausführung des Verfahrens nach Anspruch 1, mit elektronisch steuerbaren Verschlusseinrichtungen (50) zum Arretieren jeder Sitzreihe auf den Befestigungsschienen (20) und mit Antriebseinrichtungen (40) zum selektiven, kontinuierlichen Verfahren jeder Sitzreihe auf eine gewünschte Position, wobei die Funktionen der Steuerungseinrichtung durch ein in den Datenverarbeitungsanlagen des Flugzeugs arbeitendes Programm realisiert sind, das in das Avionicsystem IMA - Integrated Modular Avionics-integriert und dazu vorbereitet ist, die dem Passagierflugzeug bereits vor der Landung per Datenfernübertragung von einem Logistikzentrum des Flughafens gesendete aktuell gewünschte Sitzreihenanordnung für den nächsten Flug zu empfangen und zu speichern.

6. Passagierflugzeug nach Anspruch 5, **dadurch** gekennzeicht, dass jede Sitzreihe mit Elektromotoren für die Antriebseinrichtungen und elektromangnetischen Antriebsmitteln für die Verschlusseinrichtungen versehen ist.

## Claims

1. Method for adapting the seat row arrangement in passenger planes according to need, in which seat row distances are set in the longitudinal direction in the passenger plane, if appropriate differing in some sections, a currently desired seat row arrangement being stored in a control device, and each seat row whose position is to be changed in order to obtain the currently desired seat row arrangement being moved automatically, under control by the control device, on its fastening rails to the position predetermined by the currently desired seat row arrangement, **characterized in that** the control device is integrated in the avionics system IMA - Integrated Modular Avionics, and **in that** the currently desired seat row arrangement for the next flight is transmitted from a logistics centre of the airport by remote data transmission to the passenger plane before it lands and is stored in the control device.

2. Method according to Claim 1, **characterized in that** the control device generates control signals for each seat row whose position is to be changed in order to obtain the currently desired seat row arrangement, which control signals bring about the automatic release of the locking of the seat row on its fastening rails, control the operation of driving devices (40) in such a manner that the seat row is moved on the fastening rails to the position predetermined by the currently desired seat row arrangement, and bring about the actuation of closure devices (50) for the relocking of the seat row in the predetermined position on its fastening rails.

3. Method according to Claim 2, **characterized in that**, if the desired seat row arrangement has more or fewer seat rows than currently present, first of all a corresponding number of seat rows are removed from the passenger plane or installed in the passenger plane.

4. Method according to one of the preceding claims, **characterized in that** individual data of the currently stored seat row arrangement can be overwritten by the air crew via an interface (CIDS - Cabin Interface Device System).

5. Passenger plane for the implementation of the method according to Claim 1, having electronically controllable closure devices (50) for locking each seat row on the fastening rails (20), and having driving devices (40) for the selective, continuous moving of each seat row to a desired position, the functions of the control device being realized by a program which operates in the data processing systems of the plane, is integrated in the avionics system IMA - Integrated Modular Avionics - and is prepared for the purpose of receiving and storing the currently desired seat row arrangement for the next flight which is transmitted to the passenger plane from a logistics centre of the airport by remote data transmission before the plane lands.

6. Passenger plane according to Claim 5, **characterized in that** each seat row is provided with electric motors for the driving devices and with electromagnetic driving means for the closure devices.

## Revendications

1. Procédé permettant d'ajuster, en fonction des besoins, l'agencement de rangées de sièges dans un avion de passagers, dans lequel des distances de rangées de sièges, de sections éventuellement différentes, sont ajustées dans le sens longitudinal de l'avion de passagers, un agencement de rangées de sièges souhaité étant mémorisé dans un dispositif de commande et chaque rangée de sièges, dont la position peut être modifiée pour obtenir l'agencement de rangées de sièges souhaité, étant déplacée sur ses rails de fixation dans la position déterminée par l'agencement de rangées de sièges souhaité par l'intermédiaire du dispositif de commande, **caractérisé en ce que** le dispositif de commande est intégré dans le système Avionics IMA - Integrated Modular Avionics - et **en ce que** l'agencement de rangées de sièges souhaité pour le vol suivant est envoyé avant l'atterrissage à l'avion de passagers par télétransmission de données par un centre de logistique de l'aéroport et est mémorisé dans le dispositif de commande.

2. Procédé selon la revendication 1, **caractérisé en ce que** le dispositif de commande génère pour chaque rangée de sièges, dont la position peut être modifiée pour obtenir l'agencement de rangées de sièges souhaité, des signaux de commande qui provoquent le déblocage automatique de la rangée de sièges sur ses rails de fixation qui gèrent le fonctionnement de dispositifs d'entraînement (40) de telle manière que la rangée de sièges est déplacée sur les rails de fixation dans la position déterminée par l'agencement de rangées de sièges souhaité, et qui provoquent l'actionnement de dispositifs de verrouillage (50) pour le nouveau blocage de la rangée de sièges dans la position spécifiée, sur ses rails de fixation.

3. Procédé selon la revendication 2, **caractérisé en ce que** si l'agencement de rangées de sièges souhaité présente plus ou moins de rangées de sièges que celui existant actuellement, d'abord un nombre correspondant de rangées de sièges est retiré de l'avion de passagers ou installé dans l'avion de passagers.

4. Procédé selon l'une quelconque des revendications précédentes, **caractérisé en ce que** isolément des données de l'agencement de rangées de sièges actuellement mémorisé peuvent être écrasées par le personnel de bord par l'intermédiaire d'une interface (CIDS - Cabin Interface Device System).

5. Avion de passagers pour la réalisation du procédé selon la revendication 1, avec des dispositifs de verrouillage (50) à commande électronique permettant le blocage de chaque rangée de sièges sur les rails de fixation (20) et avec des dispositifs d'entraînement (40) permettant le déplacement sélectif et continu de chaque rangée de sièges dans une position souhaitée, les fonctions du dispositif de commande étant réalisées par un programme fonctionnant dans les installations de traitement de données de l'avion et qui est intégré dans le système Avionics IMA - Integrated Modular Avionics - et préparé à recevoir et à mémoriser l'agencement de rangées de sièges souhaité pour le vol suivant qui est envoyé avant l'atterrissage à l'avion de passagers par télétransmission de données par un centre de logistique de l'aéroport.

6. Avion de passagers selon la revendication 5, **caractérisé en ce que** chaque rangée de sièges est dotée de moteurs électriques pour les dispositifs d'entraînement et de moyens d'entraînement électromagnétiques pour les dispositifs de verrouillage.
